Europäisches Patentamt

European Patent Office

Office européen des brevets

(11) Numéro de publication: **0 387 153**
**A1**

## (12) DEMANDE DE BREVET EUROPEEN

(21) Numéro de dépôt: **90400626.9**

(22) Date de dépôt: **08.03.90**

(51) Int. Cl.5: **B67B 3/20, B23P 19/06, B25B 23/14**

(30) Priorité: **10.03.89 FR 8903161**

(43) Date de publication de la demande:
**12.09.90 Bulletin 90/37**

(84) Etats contractants désignés:
**BE CH DE GB IT LI NL**

(71) Demandeur: **Etablissements A. Bertaud**
**11 à 15, 6ème Rue Z.I. Sud B.P. No 11**
**F-13127 Vitrolles(FR)**

(72) Inventeur: **Graffin, Jean-Jacques**
**La Tasse d'en Bas, La Chapelle du Bois**
**F-72400 La Ferte Bernard(FR)**

(74) Mandataire: **Fruchard, Guy et al**
**CABINET BOETTCHER 23, rue la Boétie**
**F-75008 Paris(FR)**

(54) **Dispositif de vissage à couple de serrage réglable.**

(57) Le dispositif de vissage selon l'invention comporte un dispositif de transmission (3) comprenant un premier organe de transmission (4), un second organe de transmission (7) monté coaxialement au preier organe de transmission, entre une butée (10) et un organe d'appui (11), au moins un organe limiteur de couple (12,13) disposé entre le second organe de transmission et la butée (10) et l'organe d'appui (11), un premier organe élastique (16) réglable agissant sur l'organe d'appui (11) et un second organe élastique réglable (22) agissant sur l'organe d'appui (11) indépendamment du premier organe élastique (16) et dans le même sens que celui-ci.

EP 0 387 153 A1

## Dispositif de vissage à couple de serrage réglable.

La présente invention concerne un dispositif de vissage à couple de serrage réglable;

Le dispositif de vissage selon l'invention est particulièrement, mais non exclusivement, adapté au vissage d'un bouchon fileté sur le goulot d'une bouteille, en particulier d'une bouteille en matière plastique.

De façon classique, un tel dispositif comprend une pluralité de broches de vissage entraînées en rotation par un organe moteur par l'intermédiaire de dispositifs de transmission limiteurs de couples, réglables, permettant d'obtenir un bouchage optimal de bouteilles de types variés dont les bouchons doivent être serrés plus ou moins fort sans que les bouteilles risquent d'être endommagées.

Sur les dispositifs de vissage connus, les dispositifs de transmission limiteurs de couples comportent un premier organe de transmission, un deuxième organe de transmission monté coaxialement au premier organe de transmission pour tourner par rapport à celui-ci entre une butée fixée au premier organe de transmission et un organe d'appui solidaire en rotation du premier organe de transmission et mobile par rapport à celui-ci selon une direction parallèle à un axe de rotation des organes de transmission, au moins un organe limiteur de couple disposé entre le second organe de transmission et la butée ou l'organe d'appui, et un organe élastique réglable porté par le premier organe de transmission et agissant sur l'organe d'appui dans un sens de rapprochement vers la butée. Lorsqu'une installation comporte plusieurs broches de vissage, chacune associée à un dispositif de transmission, il est nécessaire de régler individuellement chacun des dispositifs de transmission chaque fois que l'on change le type de bouteille ou le type de bouchon. Cette opération de réglage est fastidieuse et diminue de façon appréciable le rendement de l'installation de vissage. De plus, compte tenu des cadences des machines de vissage, il n'est généralement pas possible d'effectuer ce réglage pendant le fonctionnement de la machine qui doit donc être arrêté. En poutre, chaque fois que l'on effectue un réglage, il est nécessaire de procéder à celui-ci en adaptant ce réglage aux caractéristiques propres du dispositif de transmission en particulier l'usure de l'organe limiteur de couple.

Un but de l'invention est de proposer un dispositif de vissage permettant un double réglage, l'un des réglages étant destiné à harmoniser les caractéristiques de limitation de couples des différents dispositifs de transmission d'une installation tandis que le second réglage est effectué de façon identique sur l'ensemble des dispositifs de transmission pour les adapter à un bouchon particulier ou une bouteille particulière.

Un autre but de la présente invention est de réaliser un dispositif de vissage comportant plusieurs broches de vissage dans lequel le couple de serrage de l'ensemble des broches peut être modifié par une opération de réglage unique.

En vue de la réalisation du premier but cidessus, on propose selon l'invention un dispositif de vissage comportant des dispositifs de transmission du type rappelé ci-dessus dans lequel chacun des dispositifs de transmission comporte un premier organe élastique réglable porté par le premier organe de transmission et agissant sur l'organe d'appui dans un sens de rapprochement vers la butée, et un second organe élastique réglable agissant sur l'organe d'appui indépendamment du premier organe élastique et dans un même sens que celui-ci. Ainsi, lors du réglage de chacun des organes élastiques, on modifie la limite du couple du dispositif de transmission indépendamment de la limitation de couple qui a été donnée par le réglage de l'autre organe élastique. En particulier, le réglage de l'un des organes élastiques peut être utilisé pour harmoniser le couple de serrage des différents dispositifs de transmission d'une installation multi-broches tandis que le réglage de l'autre organe élastique est effectué simultanément sur l'ensemble des dispositifs de transmission pour adapter ceux-ci à un bouchon particulier.

Selon une version avantageuse de l'invention, le second organe élastique comprend une chambre expansible étanche alimentée par un fluide sous pression, de préférence la chambre expansible est constituée par une enveloppe gonflable sensiblement torique coaxiale au premier organe de transmission. On obtient ainsi une très grande finesse de réglage. De plus, par un raccordement de l'ensemble des chambres expansibles à une source de fluide sous pression commune, on obtient immédiatement un réglage simultané de l'ensemble des dispositifs de transmission.

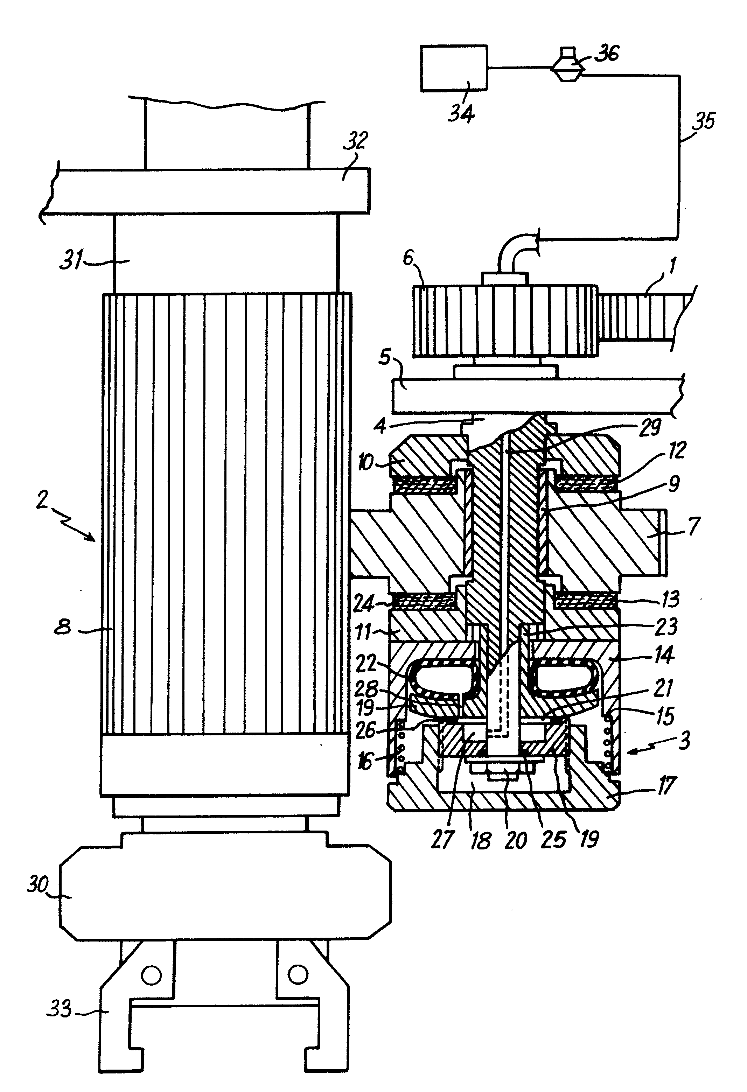

D'autres caractéristiques et avantages de l'invention apparaîtront encore à la lecture de la description qui suit d'un mode de réalisation particulier non limitatif de l'invention en liaison avec la figure unique ci-jointe qui représente une vue en élévation partielle, partiellement en coupe verticale, d'un dispositif de vissage selon l'invention.

En référence à la figure, le dispositif de vissage comprend une couronne dentée 1 formant un organe moteur pour une pluralité de broches de vissage 2 auxquelles le mouvement de la couronne dentée 1 est transmis par l'intermédiaire de dispositifs de transmission 3. Chaque dispositif de transmission 3 comprend un arbre 4 monté pour tourner sur un élément de bâti 5.

A son extrémité supérieure, l'arbre 4 porte un premier pignon 6 engrènant avec la couronne dentée 1. Dans sa partie médiane, l'arbre 4, qui forme un premier organe de transmission, porte un pignon 7 monté coaxialement à l'arbre 4 pour tourner par rapport à celui-ci. Le pignon 7 forme un second organe de transmission du dispositif de transmission 3. Le pignon 7 engrène avec une surface cannelée 8 de la broche de vissage 2 pour entraîner celle-ci en rotation lorsqu'il est lui-même entraîné en rotation. Le pignon 7 est monté libre en rotation et en translation sur l'arbre 4 au moyen d'un roulement ou d'une bague autolubrifiante 9. Le pignon 7 est disposé entre une butée 10 bloquée en rotation et en translation sur l'arbre 4 et un organe d'appui 11 solidaire en rotation de l'arbre 4 et mobile par rapport à celui-ci selon une direction parallèle à l'axe de rotation de l'arbre 4.

Dans le mode de réalisation illustré, le dispositif de transmission comporte un organe de friction 12 disposé entre le pignon 7 et la butée 10 et un organe de friction 13 disposé entre le pignon 7 et l'organe d'appui 11. Les organes de friction 12 et 13 peuvent être constitués par des garnitures annulaires en matériau à fort coefficient de friction ou par tout autre organe limiteur de couple, par exemple un dispositif magnétique ou un dispositif à billes assurant une limitation du couple transmis entre l'organe d'appui 11 et le pignon 7. Dans un cas comme dans l'autre, l'un des organes de friction 12 ou 13 peut être remplacé par une butée à billes assurant un contact sans friction d'une des faces du pignon 7 avec la butée 10 ou avec l'organe d'appui 11.

Contre la face de l'organe d'appui 11 opposée à l'organe de friction 13, le dispositif de transmission comporte un piston cloche 14 coaxial à l'arbre 4 et libre de se déplacer par rapport à celui-ci selon une direction axiale. Le piston cloche 14 comprend un épaulement intérieur 15 sur lequel prend appui une extrémité d'un ressort de compression hélicoïdal 16 formant un premier organe élastique. A son extrémité opposée à l'épaulement 15, le ressort de compression 16 prend appui sur un boulon de réglage à épaulement 17 comprenant une cavité 18 filetée intérieurement, montée sur un filetage extérieur d'une cuvette annulaire 19 elle-même fixée sur l'arbre 4 à une extrémité de celui-ci opposée à l'extrémité portant le pignon 6 par un boulon 20.

Le bord de la cuvette 19 prend appui sur une face extrême 21 d'un organe support 23 en forme de champignon monté de façon coaxiale à l'arbre 4 et prenant appui sur un épaulement 24 de l'arbre 4. Une enveloppe gonflable 22 sensiblement torique, par exemple en caoutchouc, forme un second organe élastique monté coaxialement à l'arbre 4 entre l'organe support 23 et la surface interne du piston cloche 14. La cuvette annulaire 19 est montée de façon étanche sur l'arbre 4 au moyen d'un joint torique 25 et une étanchéité est assurée entre la cuvette 19 et l'organe support 23 par un joint torique 26. La cuvette 19 délimite ainsi une chambre de distribution annulaire étanche 27 dans laquelle débouche d'une part un conduit 28 percé dans l'organe support 23 et communiquant avec l'intérieur de l'enveloppe gonflable 22, et d'autre part un conduit 29 passant à l'intérieur de l'arbre 4 et relié à une source de fluide sous pression 34, par exemple un réservoir d'air comprimé, par une canalisation 35 sur laquelle est monté un détendeur 36.

La broche de vissage 2 comprend une tête de vissage 30 montée en bout d'un corps allongé 31 portant la surface cannelée 8. Elle est montée pour tourner librement autour de son axe longitudinal sur un bâti d'actionnement 32 relié par ailleurs à des moyens d'actionnement (non représentés) destinés à déplacer verticalement la broche de vissage 2. La tête de vissage 30 est munie de mors 33 actionnés par un mécanisme logé dans la tête de vissage 30 pour saisir et bloquer en rotation un bouchon pendant son vissage sur le goulot d'une bouteille.

Le fonctionnement du dispositif de vissage selon l'invention est le suivant : la pression dans les enveloppes gonflables 22 formant des chambres expansibles étant réglée à une pression quelconque au moyen du détendeur 36 qui est de préférence commun à l'ensemble des dispositifs de transmission d'une même installation, le couple de serrage limite de chaque dispositif de transmission est testé. Lorsque le couple de serrage limite de l'un des dispositifs de transmission n'est pas identique aux autres, on agit sur l'écrou 17 pour augmenter ou diminuer le taux de compression du ressort 16 associé et ramener ainsi le couple de serrage limite du dispositif de transmission concerné à la même valeur que les autres dispositifs de transmission. Pendant cette opération l'enveloppe gonflable 22 peut éventuellement être mise totalement hors pression.

Les dispositifs de transmission étant tous réglés à la même valeur de couple limite, la pression d'air intérieure de l'enveloppe gonflable 22 est réglée pour obtenir sur l'ensemble des dispositifs de transmission le couple de serrage souhaité pour le type de bouchon devant être utilisé et l'installation est mise en route.

Si au cours du fonctionnement le type du bouchon est changé ou si l'on souhaite simplement modifier le couple de serrage du bouchon pour une raison quelconque, il suffit d'agir sur le détendeur commun pour régler instantanément l'ensemble des dispositifs de transmission de l'installation. A ce propos, on notera que le détendeur 36 est de préférence associé à une partie fixe de l'installation et la canalisation 35 comporte un joint tournant (non représenté) permettant une alimentation continue en air comprimé des enveloppes gonflables 22 associées à une partie mobile de l'installation.

On remarquera que le ressort 16 et l'enveloppe gonflable 22 agissent parallèlement l'un à l'autre sur le piston cloche 14. En cas de défaillance du système d'alimentation en air comprimé, il est donc possible de continuer à utiliser l'installation en effectuant un réglage du couple souhaité manuellement et individuellement sur chaque dispositif de transmission 3 en agissant sur le boulon de réglage 17.

Bien entendu l'invention n'est pas limitée au mode de réalisation décrit et on peut y apporter des variantes de réalisation sans sortir du cadre de l'invention. En particulier, on peut prévoir d'incorporer le dispositif de transmission 3 aux broches de vissage 2, la tête de vissage 30 étant par exemple montée à l'extrémité inférieure d'un arbre 4 s'étendant à travers le boulon de réglage 17, le pignon 6 étant supprimé et le pignon 7 étant en contact d'engrenage avec la couronne dentée 1.

De même, on peut remplacer l'enveloppe gonflable 22 par une chambre expansible réalisée par le piston cloche 14 lui-même dont le volume interne est alors rendu étanche en prévoyant des joints toriques entre les surfaces en regard du piston cloche 14 et de l'organe support 23. Le piston cloche 14 peut également être réalisé en une seule pièce avec l'organe d'appui 11.

## Revendications

1. Dispositif de vissage à couple de serrage réglable comprenant un organe moteur (1) pour entraîner en rotation au moins une tête de vissage (2) par l'intermédiaire d'un dispositif de transmission relié à l'organe moteur d'une part et à la tête de vissage d'autre part et comportant un premier organe de transmission (4), un deuxième organe de transmission (7) monté coaxialement au premier organe de transmission pour tourner par rapport à celui-ci entre une butée (10) fixée au premier organe de transmission et un organe d'appui (11) solidaire en rotation du premier organe de transmission et mobile par rapport à celui-ci selon une direction parallèle à un axe de rotation des organes de transmission, au moins un organe limiteur de couple (12,13), disposé entre le second organe de transmission et la butée ou l'organe d'appui, et un premier organe élastique (16) réglable porté par le premier organe de transmission et agissant sur l'organe d'appui dans un sens de rapprochement vers la butée (10) caractérisé en ce que le dispositif de transmission comporte un second organe élastique (22) réglable agissant sur l'organe d'appui (11) indépendamment du premier organe élastique (16) et dans le même sens que celui-ci.

2. Dispositif de vissage selon la revendication 1, caractérisé en ce que le second organe élastique (22) comprend une chambre expansible étanche alimentée par un fluide sous pression.

3. Dispositif de vissage selon la revendication 2, caractérisé en ce que la chambre expansible est constituée par une enveloppe gonflable (22) sensiblement torique coaxiale au premier organe de transmission.

4. Dispositif de vissage selon l'une des revendications 1 à 3, caractérisé en ce que le premier organe élastique (16) est un ressort hélicoïdal disposé coaxialement au premier organe de transmission (4) entre l'organe d'appui et un boulon de réglage de compression (17) vissé sur le premier organe de transmission.

5. Dispositif de vissage selon l'une des revendications 1 à 4, comportant une série de têtes de vissage chacune associée à un dispositif de transmission caractérisé en ce que le second organe élastique (22) de chaque dispositif de transmission est relié à un organe de réglage commun (36).

6. Dispositif de vissage selon la revendication 2 et la revendication 5 prises en combinaison, dans lequel le fluide est de l'air sous pression, caractérisé en ce que la chambre expansible de chaque dispositif de transmission est relié à un détendeur commun (36).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 724 461  (HITACHI KOKI CO.) <br> * Résumé; revendications 1-4; colonne 2, lignes 34-63; colonne 3, ligne 51 - colonne 4, ligne 32; figures 1,2 * | 1,2,4 | B 67 B    3/20 <br> B 23 P   19/06 <br> B 25 B   23/14 |
| Y | --- | 3,5,6 | |
| Y | GB-A-  948 146  (J. LEGENDRE) <br> * Page 3, lignes 55-78; figure 7 * | 5,6 | |
| A | --- | 2 | |
| Y | GB-A-2 113 782  (DANA CORP.) <br> * Figures 1,4,5; page 3, lignes 29-67 * | 3 | |
| A | DE-A-2 913 768  (KEWPIE K.K.) <br> * Page 8, lignes 12-17; page 11, lignes 6-22; page 21, lignes 4-12; page 27, lignes 9-21; figures 1,8 * | 1,2,4-6 | |
| A | EP-A-0 107 964  (METAL CLOSURES LTD) <br> * Page 5, lignes 1-27; figure 1 * | 2,6 | |
| A | US-A-3 491 516  (A.L. BERGERON) <br> * Figures 1,5; colonne 5, lignes 33-56 * | 2,5,6 | |
| A | DE-A-3 339 186  (MAN-ROLAND DRUCKMASCHINEN AG) <br> * Résumé; figure 2 * | 3 | |

**DOMAINES TECHNIQUES RECHERCHES (Int. Cl.5)**

B 67 B
B 23 P
B 25 B

Le présent rapport a été établi pour toutes les revendications

| Lieu de la recherche | Date d'achèvement de la recherche | Examinateur |
|---|---|---|
| LA HAYE | 06-06-1990 | MAJERUS H.M.P. |